# EUROPÄISCHE PATENTSCHRIFT

(11) **EP 0 665 529 B1**
(45) Veröffentlichungstag und Bekanntmachung des Hinweises auf die Patenterteilung: **28.07.1999**
(21) Anmeldenummer: 95100935.6
(22) Anmeldetag: 25.01.1995
(51) Int. Cl.: G10K 11/16

(54) **Vorrichtung zur Verminderung des Reifen/Fahrbahngeräusches**
Tires/road noise reduction arrangement
Dispositif pour réduire le bruit pneus/route

(30) Priorität: 29.01.1994 DE 4402699
(43) Veröffentlichungstag der Anmeldung: 02.08.1995
(73) Patentinhaber: Continental Aktiengesellschaft, 30165 Hannover (DE)
(72) Erfinder: Dodt, Dr. Thomas, D-30455 Hannover (DE); Gauterin, Frank, D-31535 Neustadt (DE); Schulze, Dr. Thomas, D-30173 Hannover (DE); Roik, Geert, D-38162 Cremlingen (DE); Huinink, Heinrich, D-30283 Garbsen (DE)

(56) Entgegenhaltungen:
- WO-A-92/15088
- DE-A- 3 409 404
- DE-A- 3 729 765
- DE-C- 4 241 518
- DE-U- 9 207 838
- GB-A- 2 163 103
- PATENT ABSTRACTS OF JAPAN vol. 016 no. 087 (M-1217) ,3.März 1992 & JP-A-03 271038 (MAZDA MOTOR CORP) 3.Dezember 1991,

## Beschreibung

Die vorliegende Erfindung betrifft eine Vorrichtung zur Verminderung bestimmter Geräuschanteile in dem von einem Kraftfahrzeug emittierten Reifen/Fahrbahngeräusch, wobei im Bereich von Abstrahleinrichtungen des Reifen/Fahrbahngeräusches als Resonator ausgebildete Schallabsorber angeordnet sind, die auf Geräuschanteile, deren Frequenzen sich proportional zur Raddrehzahl ändern, abstimmbar sind. Zwei von drei alternativen Varianten der Erfindung setzen ein ABS-Bremssystem voraus.

Der durch den Straßenverkehr verursachte Lärm zählt mit zu den störendsten Lärmquellen. Die Lärmquellen beim Kraftfahrzeug sind Motor und Reifen, wobei auf Schnell- und Pflasterstraßen und bei Nässe das Reifen/Fahrbahngeräusch überwiegt. Seit der zunehmenden Verbreitung schalldämmender Motorkapselungen wirkt das Reifen/Fahrbahngeräusch störender. LKW-Reifen entwickeln konstruktionsbedingt ein als unangenehmer empfundenes Rollgeräusch als PKW-Reifen. Aus finanziellen und ästhetischen Gründen sind Maßnahmen, die direkt an der Lärmquelle getroffen werden können, besonders vorteilhaft.

Bei PKW- und LKW-Reifen ist es seit Jahren üblich, den über den Reifenumfang aufeinanderfolgenden gleichartigen Profilelementen (Pitches) unterschiedliche Umfangslängen, auch Pitchlängen genannt, zuzuordnen. Häufig werden unter Berücksichtigung der sonstigen Profileigenschaften 3 bis 5 verschiedene Pitchlängen mit geeigneten Längenverhältnissen zueinander und deren günstigste Aufeinanderfolge (Pitchfolge) über dem Reifenumfang gewählt. Dabei geht es grundsätzlich um eine Randomisierung des Reifen/Fahrbahngeräusches, was insbesondere bewirkt, daß eine Verteilung der auftretenden Frequenzen auf ein breiteres Frequenzband erfolgt.

Trotzdem läßt es sich nicht verhindern, daß von Reifen bei bestimmten Frequenzen, die sich proportional zur Raddrehzahl ändern, Schalleistung abgestrahlt wird. Diese Frequenzen sind in einem Ordnungsspektrum als ausgeprägte Maxima (Peaks) feststellbar. Diese Peaks können verschiedene Ursachen haben, zum Beispiel die Formteilung der Heizform, die Gesamtanzahl der Pitches über den Reifenumfang, die tatsächliche Geometrie der Pitches (Klötze) aber auch eventuelle Periodizitäten innerhalb der Pitchfolge an sich. So ist dem Fachmann geläufig, daß ein Reifen mit beispielsweise 70 Pitches (Profilelementen) über dem Reifenumfang die 70. Harmonische der Raddrehzahl dominierend abstrahlt, was jedoch nicht unbedingt der Fall sein muß, da die unterschiedlichen Ursachen einander beeinflussen und überlagern. Grundsätzlich gilt jedoch, daß im Abrollgeräusch jedes Reifens Geräuschanteile mit diskreten Frequenzen oder einem schmalen Frequenzband ausgeprägter Schalleistung feststellbar sind, deren Frequenzen sich proportional zur Raddrehzahl ändern.

Aus der DE-PS 34 28 468 ist eine am Fahrzeugrad montierte Vorrichtung bekannt, die mit diesem mitrotiert. Sie umfaßt einen oder mehrere Resonator(en) mit geschwindigkeitsabhängig vermittels der Fliehkraft gesteuerten Hohlraumvolumina, die teilweise als Helmholtz-Resonatoren ausgebildet sein können.

Aus der DE-OS 37 29 765 ist eine Vorrichtung bekannt, die im Bereich der Hecktrennwand zwischen Fahrgastzelle und Kofferraum angeordnet ist und eine Batterie großvolumiger Helmholtz-Resonatoren umfaßt. Damit sollen besonders Geräuschanteile unter 80 Hz bekämpft werden.

Die DE-A-34 09 404 offenbart ein derartiges Radlaufteil, dass zwischen dem Radkasten und dem Radlaufteil ein Hohlkammer-Resonator gebildet wird, der auf eine bestimmte, invariante Frequenz abgestimmt ist und im Bereich dieser Frequenz als Schwingungsabsorber wirkt.

Die DE-U-92 07 838 lehrt die Ankoppelung eines Helmholtz-Resonators an Leitungen für pulsierende Gasströme wie Abgasanlagen von Verbrennungsmotoren. Zur Verbreiterung des Frequenzbandes, innerhalb derer der Helmholtz-Resonator gut absorbiert, ist das Resonanzrohr mittels eines Ventiles auf zwei verschiedene Längen einstellbar. Die WO-A-92 15088 zeigt eine ähnliche Vorrichtung wie die DE-U-92 07 838 für die gleichen Zwecke; hier jedoch ist die Resonanzrohrlänge stufenlos verstellbar durch Verschiebung des dem Verbindungsloch gegenüberliegenden Deckels. In beiden Fällen kann die Resonator-Verstellung in Abhängigkeit von der Motordrehzahl erfolgen.

Aufgabe vorliegender Erfindung ist es, das Reifen/Fahrbahngeräusch zu vermindern, insbesondere die Geräuschanteile, die ihre Frequenz proportional zur Fahrgeschwindigkeit ändern.

Ein Merkmal zur Lösung der gestellten Aufgabe ist gemäß aller drei Varianten der Erfindung, daß die Resonatoren am Fahrzeug an der Innenwand des Radkastens angebracht sind.

Die 1. Variante der Erfindung, die ein ABS-Bremssystem voraussetzt, weist eine elektronische Steuereinrichtung auf, in die das Signal über die Raddrehzahl vom ABS-Bremssystem übernommen wird, wobei die Steuereinrichtung gemäß der Gesamtklotzanzahl des Reifens, der Schallabstrahlungs-Charakteristik und der variabelen Raddrehzahl die Resonatoren verstellt.

Die 2. Variante der Erfindung, die kein ABS-Bremssystem voraussetzt, weist eine elektronische Regeleinrichtung auf, in die das von Schallaufnehmern, beispielsweise Mikrophonen, aufgenommene Signal über den zeitlichen Verlauf des Schalldruckes gespeist wird, wobei eine Verstelleinrichtung die Resonatoren so einstellt, daß das gemessene Schalldrucksignal minimal wird.

Die 3. Variante der Erfindung, die ein ABS-Bremssystem voraussetzt, weist eine Datenverarbeitungseinrichtung auf, die sich in eine elektronische Steuereinrichtung und eine elektronische Regeleinrichtung gliedert, wobei in die Regeleinrichtung das von Schallaufnehmern, beispielsweise Mikrophonen, aufgenommene Signal über den zeitlichen Verlauf des Schalldruckes gespeist wird und wobei eine der Datenverarbeitungs-Einrichtung nachgeschaltete Verstelleinrichtung die Resonatoren so einstellt, daß in den von der Steuereinrichtung entsprechend dem Raddrehzahlsignal ausgewählten Frequenzbereichen das gemessene Schalldrucksignal minimal wird.

Die vorgeschlagenen Vorrichtungen können wirkungsvoll und gezielt jene Geräuschanteile im Reifen Reifen/Fahrbahngeräusch von Reifen, deren Frequenzen sich proportional zur Raddrehzahl ändern, in bestimmten Bereichen weitgehend mindern oder sogar eliminieren. Dadurch wird im Nah- und Fernfeld des Kraftfahrzeuges und auch im Fahrzeuginneren der Lärmpegel insgesamt gesenkt; insbesondere werden die Intensität bestimmter Frequenzen deutlich herabgesenkt und tonale Geräusche, die als besonders lästig empfunden werden, vermindert.

Weitere erfindungsgemäße und besonders vorteilhafte Ausgestaltungen der Vorrichtungen nach den Ansprüchen 1 bis 3 sind in den Unteransprüchen enthalten.

Als Schallabsorber kommen insbesondere schmalbandige Absorber in Frage, deren Eigenfrequenzbereiche in Abhängigkeit von der Raddrehzahl verändert werden. Breitbandige Absorber wären zu wenig effektiv, schmalbandige "starre" Absorber könnten den sich mit der Raddrehzahl bzw. der Fahrzeuggeschwindigkeit ändernden Frequenzbereich nicht abdecken.

Es ist ferner von Vorteil, wenn die Vorrichtung den Eigenfrequenzbereich jedes Schallabsorbers auf mindestens eine der sich mit der Raddrehzahl ändernden Frequenzen im Rollgeräusch des Reifens abstimmt und bei Raddrehzahländerungen entsprechend anpaßt.

Als einstellbare Schallabsorber kommen insbesondere Helmholtz-Resonatoren, Lambda/4-Resonatoren oder Loch-Resonatoren in Frage.

Nach einer bevorzugten Ausführungsform der Erfindung werden Helmholtz-Resonatoren mit veränderlicher Resonatorhalslänge oder veränderlicher Resonator-Eintrittsöffnung eingesetzt.

Vorzugsweise werden Resonatoren mit einstellbaren Hohlraumvolumina verwendet. Eine Veränderung der Resonatorhalslänge ist dadurch leicht möglich, daß der Resonator einen als doppelwandigen Balg ausgeführten Resonatorhals, insbesondere aus Gummi oder Kunststoff, aufweist, dessen Innenraum mit einstellbarem Luftdruck befüllbar ist.

Eine Ausführungsform, bei der die Resonator-Eintrittsöffnung veränderbar ist, besteht darin, daß der Resonatorhals als balgartiger hohler Körper ausgebildet ist, dessen innenseitige Wand mit zumindest einem umlaufenden keilartigen Vorsprung versehen ist, wobei der balgartige Körper mit sich änderndem Luftdruck beaufschlagbar ist. Zur Verstellung der Eintrittsöffnung kann auch der Durchmesser des Resonatorhalses über einen steuerbaren Mechanismus, z. B. eine druckgesteuerte Membran, verändert werden.

Bei einer weiteren Ausführungsform der Erfindung ist ebenfalls eine Anzahl von Helmholtz-Resonatoren mit unterschiedlichen Hohlraumvolumina vergesehen, die in einem Kasten angeordnet sind. Über den Öffnungen dieser Resonatoren, die vorzugsweise verschieden groß sind, ist ein verschiebbares Raster angeordnet, das solche Löcher aufweist, die in unverschobener Lage mit den Öffnungen der Resonatoren deckungsgleich sind. Ein Verschieben des Rasters erlaubt ein teilweises Abdecken oder Öffnen der Absorber-Eintrittsöffnungen, so daß auch auf diese Weise der Eigenfrequenzbereich der einzelnen Resonatoren verändert werden kann.

Bei einer weiteren Ausführungsform der Erfindung werden mehrere Resonatoren mit unterschiedlichen Hohlraumvolumina nebeneinander angeordnet, wobei sie gemeinsame Wandbereiche besitzen, und sowohl diese als auch die entsprechenden Außenwände doppelwandig und als Bälge ausgeführt sind, deren Innenräume mit sich änderndem Luftdruck beaufschlagbar sind.

So wird auf einfache Weise eine geeignete Anpassung der Eigenfrequenzen der Resonatoren durch entsprechende Vergrößerung oder Verkleinerung der Hohlräume der Resonatoren erzielt.

Bei einer weiteren einfachen Ausführungsform der Erfindung sind mehrere Resonatoren mit unterschiedlichen Hohlraumvolumina nebeneinander angeordnet, wobei ihre Wände zumindest zum Teil balgartig ausgeführt sind und deren Hohlräume direkt mit veränderbarem Luftdruck beaufschlagbar sind.

Eine Regelung der Resonatoren kann auf einfache Weise dadurch bewerkstelligt werden, daß eine elektronische Regeleinrichtung vorgesehen wird, die als steuernde Führungsgröße die Raddrehzahl erhält und gemäß der Gesamtklotzanzahl des Reifens und der Schallabstrahlungscharakteristik eine Ansteuerung der Resonatoren bewirkt.

Bei einer anderen Variante der Erfindung kann die Wandimpedanz von zumindest einer Resonatorwand verändert werden. Dazu wird beispielsweise in die Resonatorwand ein Lautsprecher eingebaut oder auf der Resonatorwand eine Piezofolie bzw. ein Piezokeramik aufgebracht. Durch die Veränderung der Wandimpedanz kann für bestimmte Frequenzbereiche die Resonanzfrequenz des Resonators in vergleichbarer Weise, wie durch Veränderung des Resonatorvolumens, beeinflußt werden.

Die Regelung und Steuerung dieser Ausführungsform ist zum Beispiel dadurch einfach möglich, daß vor oder an den Resonatoren Schallaufnehmer, beispielsweise Mikrophone, angebracht werden, die den zeitlichen Verlauf des Schalldruckes aufnehmen und an eine Regeleinrichtung weitergeben, die gemäß einer Frequenz- bzw. Ordnungsanalyse die Verstellung der Resonatoren bewirkt.

Alternative dazu oder in Kombination mit dieser Regelung kann im Resonator eine Sensor, beispielsweise ein Mikrophon, angebracht werden, welches ebenfalls eine Eingangsgröße für die Regeleinrichtung zur Ansteuerung des Resonators liefert.

Dabei kann ferner die Regeleinrichtung als weitere Eingangsgröße die Raddrehzahl erhalten. Bei Fahrzeugen, die mit einem ABS-System ausgerüstet sind, können vorteilhafterweise die bereits vorhandenen Sensoren zur Ermittlung der Raddrehzahl die Eingangsgröße für die Regeleinrichtungen liefern.

Bei einer vorteilhaften Weiterentwicklung des erfindungsgemäßen Systems kann die Regeleinrichtung eine Einrichtung zur variablen und geschwindigkeitsabhängigen Umschaltung der Resonatoren aufweisen. Dadurch kann der Regelbereich eines jeden einzelnen Resonators vermindert werden, zusätzlich können bei bestimmten Fahrzeuggeschwindigkeiten dominierende Ordnungen der harmonischen Analyse effektiver beeinflußt werden.

Die Regeleinrichtung kann ferner derart ausgelegt werden, daß sie die Resonanzfrequenzen der räumlich verteilten Resonatoren an die räumliche und raddrehzahlabhängige Verteilung des einfallenden Schalles anpaßt.

Um die Schallabsorption des Systems in einem höheren Frequenzbereich (etwa >800 Hz), demnach bei hohen Ordnungen und höheren Geschwindigkeiten deutlich zu verbessern, können ferner die Zwischenräume zwischen den Resonatoren, den Resonatoröffnungen und/oder den Resonatorhälsen mit schallabsorbierendem Material, beispielsweise Schaumstoff, Glaswolle, Steinwolle oder dergleichen, versehen werden.

Die Verschmutzung der Resonatoren läßt sich dadurch bekämpfen, daß diese mit Luft durchströmt werden. Alternativ dazu ist es möglich, die Resonatoröffnungen mit einem akustisch möglichst neutralen Material, beispielsweise einer Membran, einer Folie, einem Gewebe oder einer Kappe abzudecken.

Erfindungsgemäß sind die Schallabsorber an der Innenwand des den Reifen zumindest zum Teil abdeckenden Radkastens angeordnet. Dies ist besonders bei Schwerlastfahrzeugen von Vorteil, da bei diesen die Radkästen im allgemeinen sehr weit über den Reifen bzw. das Rad greifen.

Es ist jedoch auch denkbar, die Schallabsorber am Fahrzeugrahmen anzuordnen. Dabei sollten die Schallabsorber zumindest in den Bereichen der hauptsächlichen Abstrahlrichtung des Reifen/Fahrbahngeräusches angebracht sein.

Weitere Merkmale, Vorteile und Einzelheiten der Erfindung werden nun anhand der Zeichnung, die mehrere Ausführungsbeispiele darstellt, näher beschrieben. Dabei zeigt:
- Fig 1a: ein typisches Ordnungsspektrum eines LKW-Reifens,
- Fig. 1b: das Ordnungsspektrum eines LKW-Reifens mit gleichmäßiger Klotzteilung,
- Fig. 1c: beispielhaft den Verlauf des Schalldruckpegels als Funktion der Geschwindigkeit,
- Fig. 2: schematisch eine Möglichkeit der grundsätzlichen Anordnung von Absorbern am Fahrzeug,
- Fig. 3 - 8: unterschiedliche Ausführungsvarianten von im Rahmen der Erfindung einsetzbaren Schallabsorbern im Schnitt,
wobei Fig. 6a eine Schrägansicht der Ausführungsvariante nach Fig. 6 ist (ebenfalls in schematischer Darstellung),
- Fig. 9: Grundprinzipien einer möglichen Steuerung und Regelung der Schallabsorber gemäß der Figuren 3 bis 8 und
- Fig. 10: schematisch eine weitere Ausführungsform der Erfindung mit prinzipieller Regelungsmöglichkeit.

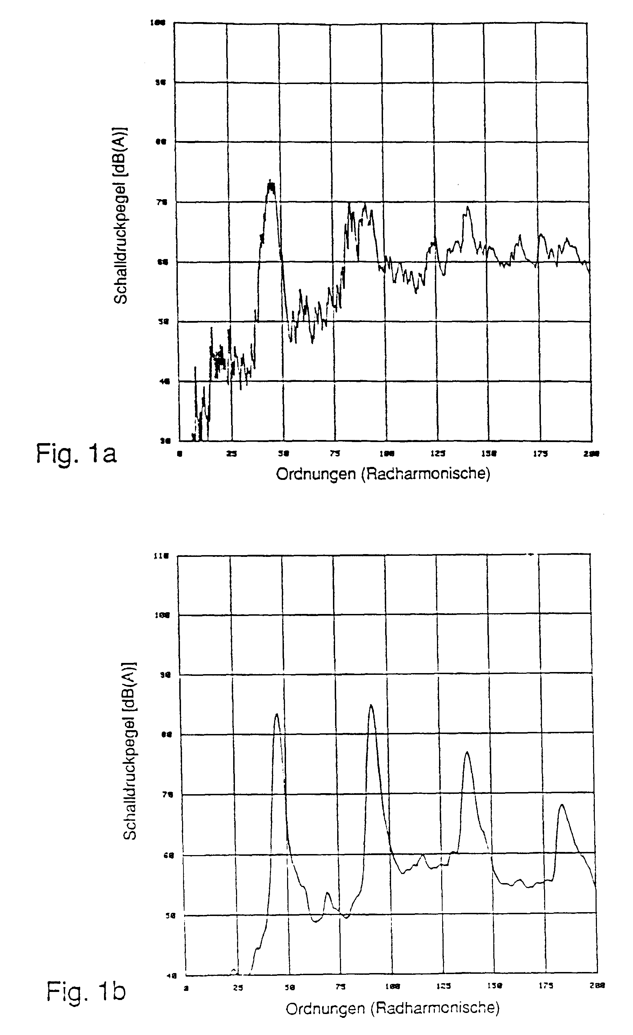

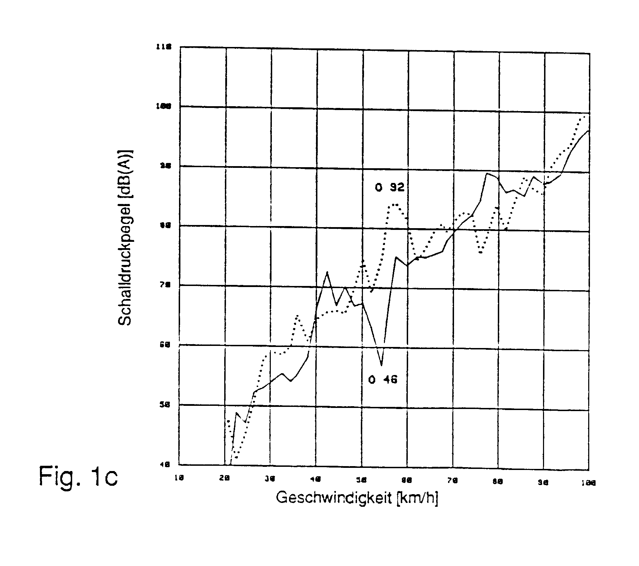

Figur 1a zeigt ein typisches Ordnungsspektrum eines LKW-Reifens heutiger Bauart. Auf der Ordinate ist der Schalldruckpegel, auf der Abszisse sind die Ordnungszahlen aufgetragen. Das Ordnungsspektrum zeigt neben dem Grundrauschen ausgeprägte Maxima, deren Frequenz von der Fahrgeschwindigkeit abhängen. Dabei entspricht typischerweise die 100. Ordnung bei 100 km/h einer Schallfrequenz von 830 Hz, wobei sich diese Frequenz bei einer Änderung der Geschwindigkeit proportional mitverändert.

Daß gerade bei vielen LKW-Reifen im Ordnungsspektrum eine Anzahl ausgeprägter Peaks auftritt, obwohl die Anordnung der in verschiedenen Umfangslängen gewählten Profilmustereinheiten (Pitches) nach einer Pitchfolge erfolgt, rührt daher, daß der Wahl des maximalen Pitchlängenverhältnisses eine Grenze gesetzt ist, da sich hohe Pitchlängenverhältnisse ungünstig auf den Abrieb des Laufstreifens auswirken. Das maximale Pitchlängenverhältnis, also das Verhältnis der Länge des längsten Pitches zur Länge des kürzestens Pitches, wird bei LKW-Laufstreifenprofilen meistens kleiner oder etwa gleich 1,2 gewählt. Bestimmte Harmonische der Raddrehzahl treten daher ausgeprägt auf. Im konkreten Beispiel nach Fig. 1a sind diese insbesondere die Ordnungen im Bereich der Ordnungszahl 46 (=N), der Ordnungszahl 92 (=2N) und der Ordnungszahl 138 (=3N), mit N Gesamtanzahl der Pitches über den Reifenumfang.

In Fig. 1b ist ein gleichartiges Spektrum eines LKW-Reifens aufgetragen. Für das Profil dieses Reifens wurden keine Pitches mit unterschiedlichen Längen verwendet. Die hierdurch auftretenden Radharmonischen (Klotzanzahl und Vielfache davon) treten deutlich hervor.

Fig. 1c zeigt beispielhaft die Geräuschanteile zweier verschiedener Ordnungen (46. und 92. Radharmonische) als Funktion der Geschwindigkeit. Die Geschwindigkeitsabhängigkeit der Ausprägung der beiden Ordnungen ist deutlich zu sehen.

Im folgenden werden nun die nach der vorliegenden Erfindung vorgeschlagenen Maßnahmen beschrieben, die gezielt ein Vermindern störender Ordnungen (Ordnungen mit hohen Amplituden) bewirken.

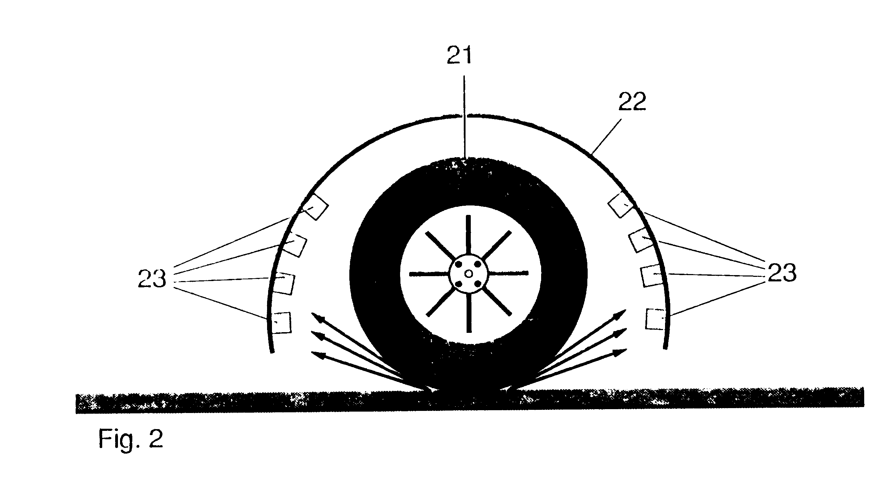

Eine Möglichkeit einer grundsätzlichen Anordnung der Resonatoren am Fahrzeug zeigt Fig. 2. Schematisch dargestellt ist ein Rad 21 mit Reifen in Seitenansicht mit dem darüber angeordneten Radkasten 22. Die hauptsächlichen Abstrahlrichtungen des Reifen/Fahrbahngeräusches im Latscheinlauf und im Latschauslauf sind durch Pfeilbündel angedeutet. Günstig ist es dabei, die Schallfelder vorab zu messen, um die günstigste Anordnung der Resonatoren an der Innenwand des Radkastens 22 zu bestimmen. In den beiden Hauptschallfeldbereichen ist es dabei günstig, wenn für jeden störenden Peak im Ordnungsspektrum des Reifens zumindest je ein abgestimmter und entsprechend eventueller Geschwindigkeitsänderungen verstellbarer Resonator vorgesehen ist.

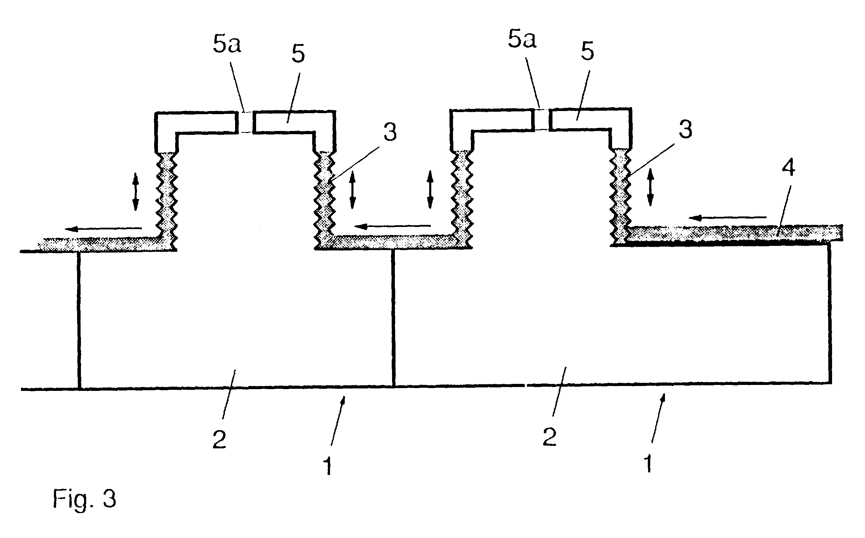

Bei den in Fig. 3 bis 9 dargestellten und im folgenden beschriebenen Ausführungsbeispielen wird als Lösung zu dem aufgezeigten Problem die durch eine elektronische Steuer- und/oder Regeleinrichtung berechnete Anpassung von Absorbern vorgeschlagen.

Im Rahmen der vorliegenden Erfindung eignen sich insbesondere Absorber, die auf dem Grundprinzip von Helmholtz-Resonatoren aufbauen. Wie bekannt besteht ein Helmholtz-Resonator grundsätzlich aus einem Hohlraum, dessen kompressives Luftvolumen V wie eine Feder wirkt, während die Luftmasse im Resonatorhals, welcher eine bestimmte Länge und eine bestimmte Querschnittsfläche aufweist, die schwingende Masse bildet. Gemäß der Erfindung wird nun der Eigenfrequenzbereich von Resonatoren (Frequenzbereich maximaler Absorption) dem aktuellen Reifengeräusch angepaßt.

Die zur Anpassung bzw. Veränderung des Frequenzbereiches der maximalen Absorption zu treffenden Maßnahmen basieren darauf, daß der Eigenfrequenzbereich eines solchen Resonators direkt proportional der Querschnittsfläche des Resonatorhalses und umgekehrt proportional zur Wurzel des Volumens des Hohlraumes und zur Wurzel der Länge des Resonatorhalses ist.

Figur 3 zeigt eine Ausführungsform der Erfindung mit nebeneinander angeordneten Resonatoren 1 mit unterschiedlich großen Resonatorhohlräumen 2. Die Wände der Resonatorhohlräume 2 können beispielsweise aus Kunststoff bestehen. Jeder Resonatorhohlraum 2 ist mit einem Resonatorhals versehen, welcher als doppelwandiger Balg 3 aus Gummi oder Kunststoff ausgeführt ist. Auf den Bälgen 3 sitzen Platten 5, die die Resonatoröffnungen 5a aufweisen. Über eine Luftzufuhrleitung 4 können die Bälge 3 gleichzeitig mit Druckluft beaufschlagt werden, so daß die Resonatorhalslänge durch entsprechende Druckänderungen verändert werden kann. Dies ist durch die Doppelpfeile in Fig. 3 angedeutet. In diesem Ausführungsbeispiel sind die doppelwandigen Bälge 3 gleich groß.

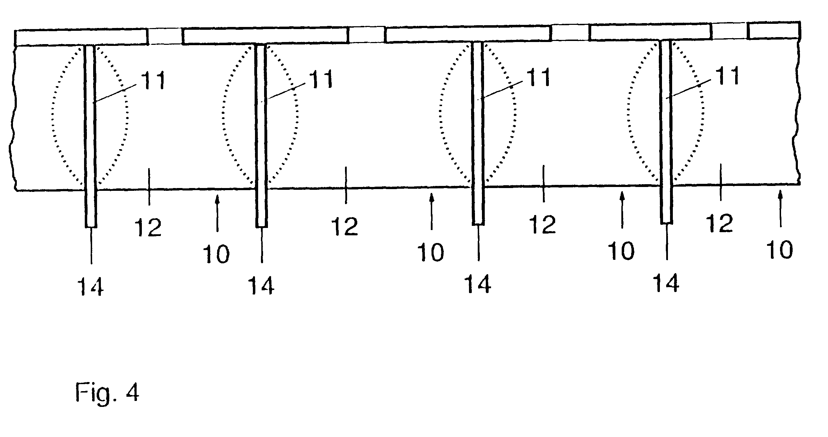

Figur 4 zeigt eine Ausführungsvariante mit mehreren nebeneinander angeordneten Resonatoren 10 mit unterschiedlichen Hohlraumvolumina. Die die Hohlräume 12 der einzelnen Resonatoren 10 voneinander trennenden und die begrenzenden Wände 11 sind doppelwandig und als dehnbare Membranen ausgeführt, so daß durch Luftzufuhr über einzelne Leitungen 14 durch gemeinsame Beaufschlagung mit Über- oder Unterdruck die Hohlräume der Resonatoren 10 vergrößert oder verkleinert werden können, was durch die punktierte Lage der Wandteile angedeutet ist.

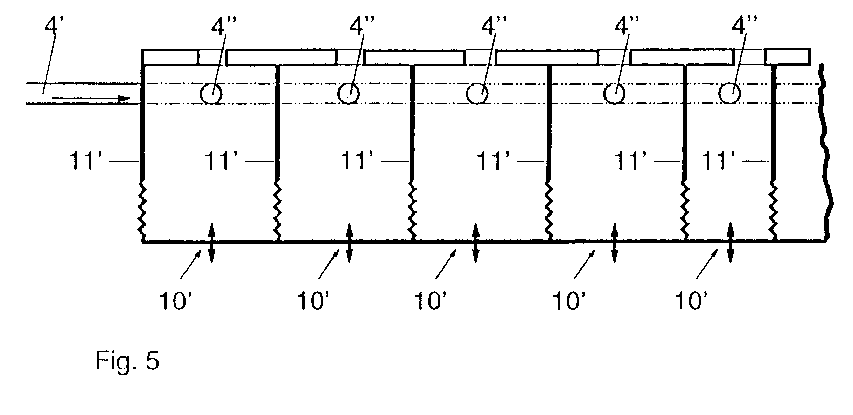

Figur 5 zeigt ebenfalls eine Ausführung mit mehreren nebeneinander angeordneten Resonatoren 10' mit unterschiedlichen Hohlraumvolumina. Die Hohlraumvolumina werden dabei direkt mit Druckluft über eine Luftzufuhrleitung 4' beaufschlagt, die in jedem Resonator 10' eine Austrittsöffnung 4'' besitzt. Die die Hohlräume begrenzenden Wände 11 sind zumindest zum Teil balgartig ausgeführt, so daß über eine geeignete Beaufschlagung der Hohlräume mit Luftdruck eine Volumenänderung erfolgt, was durch die Doppelpfeile in Figur 5a angedeutet ist.

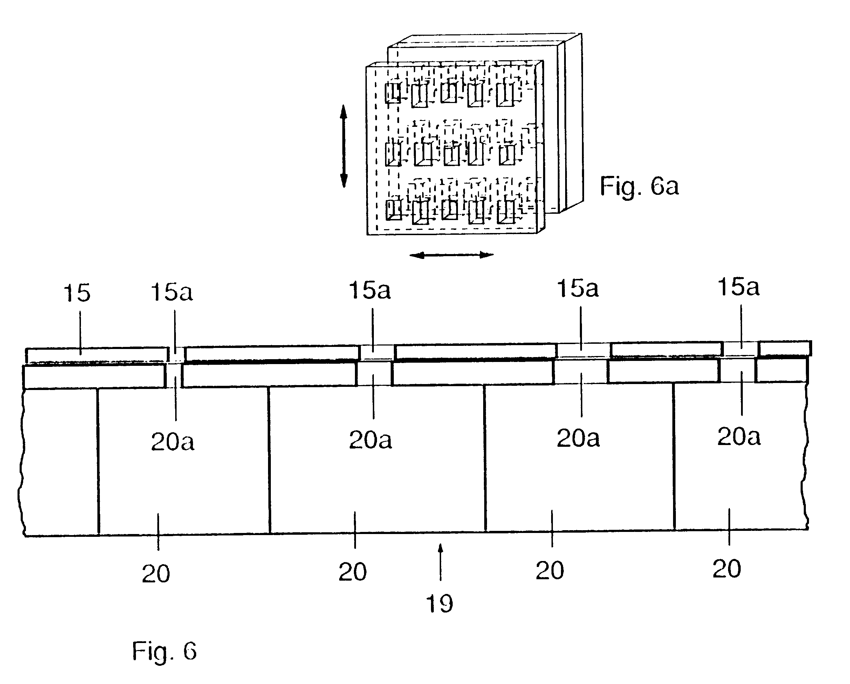

Bei der in den Figuren 6 und 6a gezeigten Ausführungsvariante ist eine Vielzahl von Resonatoren 20, welche ebenfalls unterschiedliche Hohlraumvolumina, aufweisen in einem Kasten 19 angeordnet. Zusätzlich sind die Resonatoröffnungen 20a verschieden groß gewählt. Auf dem Kasten 19 liegt ein Raster 15, das ebenfalls mit Löchern 15a versehen ist. Die Löcher 15a sind in der Ausgangslage des Rasters 15 deckungsgleich zu den Öffnungen 20a. Das Raster 15 ist gegenüber dem Kasten 19 verschiebbar. Durch eine geeignete Verschiebung des Rasters 15 (s. Pfeile in Fig. 6a) wird ein teilweises Abdecken oder Öffnen der Absorbereintrittsöffnungen 20a ermöglicht, wodurch der Eigenfrequenzbereich der einzelnen Resonatoren 20 verändert werden kann.

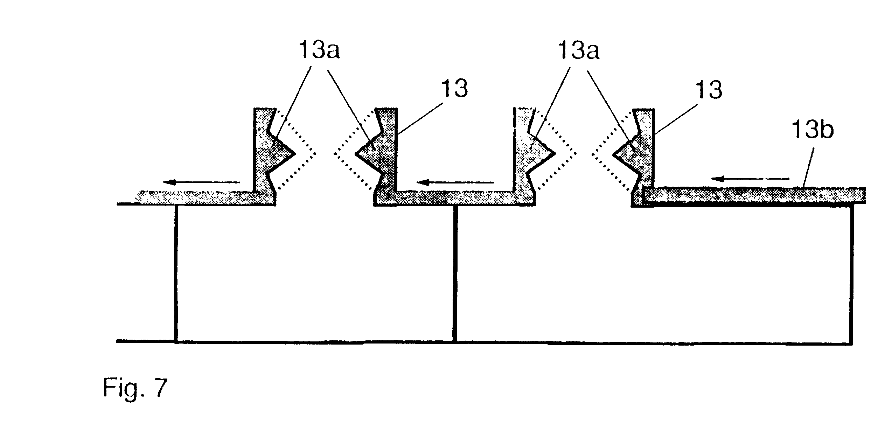

Fig. 7 zeigt ein Ausführungsbeispiel, bei dem durch Veränderung des Querschnittes eines Resonartorhalses eine entsprechende Beeinflussung erfolgt. Der Resonatorhals ist von einem balgartigen, hohlen Körper 13 umschlossen oder gebildet, dessen innenseitige Wand einen keilartig ausgeführten Vorsprung 13a aufweist, der je nach Innendruckbeaufschlagung über eine Leitung 13b die Eintrittsöffnung zum Resonatorhohlraum vergrößert oder verkleinert. Die punktierte Lage entspricht einer Lage mit entsprechender Druckbeaufschlagung. Die Pfeile symbolisieren die Richtung der Luftzufuhr.

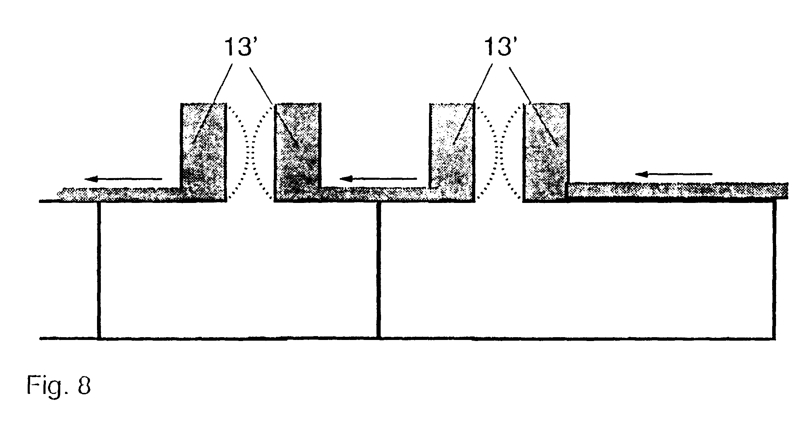

Fig. 8 zeigt eine weitere Ausführung, bei der der Durchmesser des Resonatorhalses über einen steuerbaren Mechanismus, hier eine druckgesteuerte Membran 13', oder einen Balg, variiert wird, wobei die punktiert eingezeichnete Lage der Lage unter Druckbeaufschlagung entspricht. Auch hier zeigen die Pfeile die Richtung der Luftzufuhr an.

Äquivalente Maßnahmen lassen sich auf einfache Weise auch bei Lochresonatoren und Lambda/4-Resonatoren ergreifen. Es bietet sich beispielsweise an, die Resonatorlänge oder die Hohlraum-Volumina in zu den Ausführungsbeispielen gemäß Fig. 3 und Fig. 4 äquivalenter Art und Weise zu verändern.

Die tatsächlichen Abmessungen der Resonatoren sowie ihr jeweiliger Regelbereich werden auf die zu beeinflussenden Geräuschanteile im Reifen/Fahrbahngeräusch des jeweils betrachteten Reifens angepaßt.

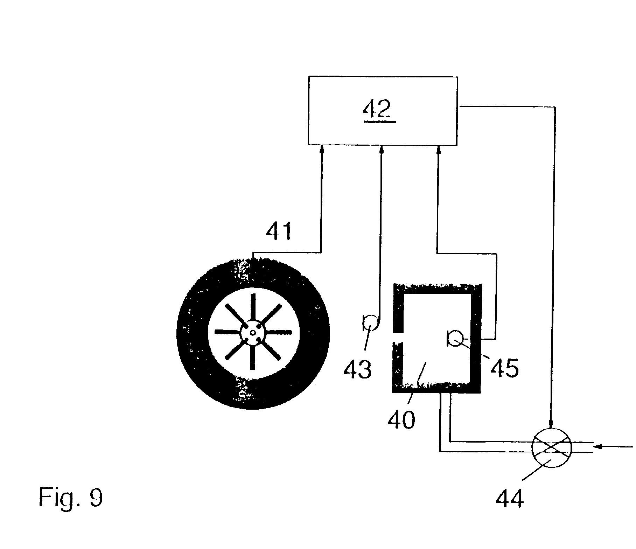

Fig. 9 zeigt zwei Grundprinzipien der Regelung und Steuerung von Resonatoren gemäß den Ausführungsbeispielen nach Fig. 3 bis 8. Die Anordnung umfaßt dabei erfindungsgemäß ausgeführte Resonatoren und Stellglieder, von welchen jeweils ein Resonator 40 und ein Stellglied 44 dargestellt ist, sowie eine elektronische Regeleinrichtung 42.

Die Regeleinrichtung 42 kann als Führungsgröße die Raddrehzahl 41 erhalten, und ermittelt aus der bekannten Gesamtklotzanzahl und den bekannten Schallabstrahlungseigenschaften des jeweiligen Reifens jene Resonatoren, die bezüglich ihrer Resonanzfrequenzen angesteuert bzw. angepaßt werden sollen.

Alternativ dazu kann vor oder an jedem Resonator 40 ein Schallaufnehmer 43 (Mikrophon) angebracht werden, über den der zeitliche Verlauf des einfallenden Schalldruckes aufgenommen wird und an die Regeleinrichtung 42 übertragen wird. In diesem Falle werden von der Regeleinrichtung 42 eine Frequenz- bzw. Ordnungsanalyse durchgeführt und die passenden Resonatoren angesteuert.

Die Regeleinrichtung 42 kann auch so ausgeführt werden, daß sowohl die Raddrehzahl 41 als auch der Schalldruckverlauf als Führungsgrößen eingehen, was die Redundanz des Regelungssystems erhöht und eine adaptive Anpassung der Regelgröße ermöglicht.

Vorteilhafterweise wird in den Resonatoren 40 jeweils ein akustisch/elektrischer Wandler 45, beispielsweise ein Mikrophon, eine Piezofolie oder dergleichen angebracht, über welche die tatsächliche Resonanzfrequenz (Istwert) des jeweiligen Resonators 40 ermittelt wird. Auf diese Weise ist eine Feedbackkontrolle der eingestellten Resonanzfrequenz der Resonatoren 40 möglich.

Die Regeleinrichtung 42 selbst kann in bekannter Weise entsprechende Eingangsfilter, Eingangsverstärker, ein analoge oder digitale Elektronik und die erforderliche Steuerung zur Beeinflussung des Stellgliedes 44 enthalten. Die Ansteuerung der Resonatoren kann beispielsweise elektrisch, pneumatisch oder hydraulisch erfolgen.

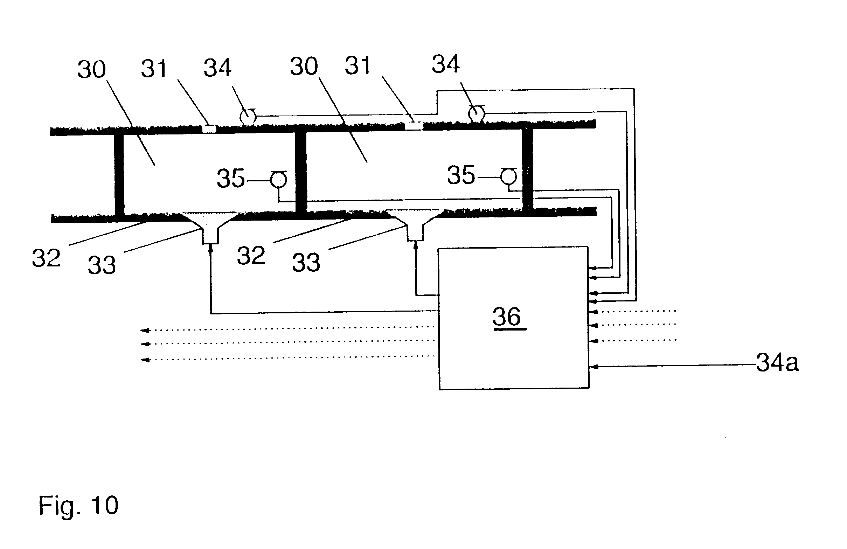

Eine andere Ausführungsform mit über ein Stellglied (="aktiv") anpaßbaren Resonatoren ist in Fig. 10 dargestellt. Diese Ausführungsform nützt das Prinzip, die Wandimpedanz mindestens einer Resonatorwand aktiv zu verändern. Fig. 9 zeigt dazu mehrere Helmholt-Resonatoren 30 mit Resonatoröffnungen 31, wobei jeweils an der der Resonatoröffnung 31 gegenüber liegenden Wand 32 ein Aktuator 33 aufgebracht ist. Als Aktuator 33 kann ein Lautsprecher dienen oder auch eine Piezofolie oder eine Piezokeramik verwendet werden.

Durch die Veränderung der Wandimpedanz kann für bestimmte Frequenzbereiche die Resonatorfrequenz in der gleichen Weise beeinflußt werden, wie durch die Veränderung des Resonatorvolumens. Dabei wird durch die schwingende Resonatorwand die Federkonstante des im Resonatorraumes eingeschlossenen Luftvolumens (das heißt die Steife des Gasvolumens) verändert.

Die Eigenfrequenz dieses Systems (=Resonatorfrequenz) erhält man wie im unbeeinflußten System aus der Wurzel der Federkonstante geteilt durch die Wurzel der Masse des Gasvolumens im Resonatorhals. Über Schallaufnehmer 34, beispielsweise Mikrophone, die vorzugsweise vor den Resonatoren 30 plaziert sind, wird der zeitliche Verlauf des einfallenden Schalldruckes aufgenommen und an eine Regeleinrichtung 36 übertragen. Die Regeleinrichtung 36 führt eine Frequenz- oder Ordnungsanalysen durch und regiert die Aktuatoren 33.

In jedem Resonator 30 kann ferner ein Sensor 35, beispielsweise ein Mikrophon angebracht sein, welcher die Güte der Regelung überwacht. Bei geeigneter Auslegung der Regeleinrichtung 36 ist es möglich, entweder Schallaufnehmer 34 oder lediglich Sensoren 35 (Feedback-Control) vorzusehen. Die Regelung kann dadurch optimiert werden, daß in die Regeleinrichtung 36 zusätzlich die Raddrehzahl 34a als steuernde Führungsgröße eingeht.

Bei den beschriebenen Regelungen kann bei Fahrzeugen, die mit einem ABS-System ausgerüstet sind, der bereits vorhandene Sensor zur Ermittlung der Raddrehzahl die Führungsgröße für die Regeleinrichtungen 36, 42 liefern.

Die Regeleinrichtung 36, 42 kann ferner eine Einrichtung zur variablen, geschwindigkeitsabhängigen Umschaltung der aktiv angesteuerten Resonatoren aufweisen. So kann beispielsweise ein Resonator im unteren Geschwindigkeitsbereich für die 2. Klotzharmonische (bei 50 Pitches = 100. Ordnung) angesteuert werden, bei hohen Geschwindigkeiten aber für die 1. Klotzharmonische (bei 50 Pitches = 50. Ordnung). Dadurch wird der Regelbereich der Resonatoren vermindert und es können zusätzlich bei bestimmten Geschwindigkeiten dominierende Ordnungen effektiver, das heißt durch eine höhere Anzahl von zur Verfügung stehenden Resonatoren vermindert werden.

Bei sämtlichen Ausführungsbeispielen können die Resonatoren zusätzlich mit Luft durchströmt werden, wobei der durch die Resonatoröffnungen austretende Luftstrom einer Verschmutzung der Resonatoren entgegenwirkt. Es ist ferner möglich, zu diesem Zwecke die Resonatoröffnungen mit akustisch möglichst neutralem Material, beispielsweise einer geeigneten Membran, einer Folie, einem Gewebe oder eine Kappe aus Gummi oder Kunststoff abzudecken.

Von Vorteil ist es ferner, wenn die Zwischenräume zwischen den Resonatoren, den einzelnen Resonatorhälsen oder Resonatoröffnungen mit einem konventionellen Schallabsorptionsmaterial (Schaumstoff, Glas- oder Steinwolle oder ähnliches) versehen werden. Dadurch wird die Schallabsorption in hohen Frequenzbereich (>800 Hz), demnach bei hohen Ordnungen und hohen Geschwindigkeiten, verbessert.

## Patentansprüche

1. Vorrichtung zur Verminderung bestimmter Geräuschanteile in dem von einem mit einem ABS-Bremssystem ausgerüsteten Kraftfahrzeug emittierten Reifen/Fahrbahngeräusch, wobei im Bereich von Abstrahlrichtungen des Reifen/Fahrbahngeräusches als Resonator ausgebildete Schallabsorber (1, 10, 10', 20, 30, 40) angeordnet sind, die auf Geräuschanteile, deren Frequenzen sich proportional zur Raddrehzahl ändern, abstimmbar sind,
**dadurch gekennzeichnet**, daß die Resonatoren am Fahrzeug an der Innenwand des Radkastens angebracht sind und eine elektronische Steuereinrichtung (42) vorgesehen ist, in die das Signal über die Raddrehzahl vom ABS-Bremssytem übernommen wird, wobei die Steuereinrichtung gemäß der Gesamtklotzanzahl des Reifens, der Schallabstrahlungs-Charakteristik und der variablen Raddrehzahl die Resonatoren (40) verstellt.

2. Vorrichtung zur Verminderung bestimmter Geräuschanteile in dem von einem Kraftfahrzeug emittierten Reifen/Fahrbahngeräusch, wobei im Bereich von Abstrahlrichtungen des Reifen/Fahrbahngeräusches als Resonator ausgebildete Schallabsorber (1, 10, 10', 20, 30, 40) angeordnet sind, die auf Geräuschanteile veränderlicher Frequenzen abstimmbar sind,
**dadurch gekennzeichnet,** daß die Resonatoren am Fahrzeug an der Innenwand des Radkastens angebracht sind, und eine elektronische Regeleinrichtung (42) vorgesehen ist, in die das von Schallaufnehmern, beispielsweise Mikrophonen, aufgenommene Signal über den zeitlichen Verlauf des Schalldruckes gespeist wird, wobei eine Verstelleinrichtung die Resonatoren (40) so einstellt, daß das gemessene Schalldrucksignal minimal wird.

3. Vorrichtung zur Verminderung bestimmter Geräuschahteile in dem von einem mit einem ABS-Bremssystem ausgerüsteten Kraftfahrzeug emittierten Reifen/Fahrbahngeräusch, wobei im Bereich von Abstrahlrichtungen des Reifen/Fahrbahngeräusches als Resonator ausgebildete Schallabsorber (1, 10, 10', 20, 30, 40) angeordnet sind, die auf Geräuschanteile, deren Frequenzen sich proportional zur Raddrehzahl ändern, abstimmbar sind,
**dadurch gekennzeichnet,** daß die Resonatoren am Fahrzeug an der Innenwand des Radkastens angebracht sind und, daß eine Datenverarbeitungs-Einrichtung (42) vorgesehen ist, die sich in eine elektronische Steuereinrichtung und eine elektronische Regeleinrichtung gliedert, wobei in die Regeleinrichtung das von Schallaufnehmern, beispielsweise Mikrophonen, aufgenommene Signal über den zeitlichen Verlauf des Schalldruckes gespeist wird und wobei eine der Datenverarbeitungs-Einrichtung (42) nachgeschaltete Verstelleinrichtung die Resonatoren (40) so einstellt, daß in den von der Steuereinrichtung entsprechend dem Raddrehzahlsignal ausgewählten Frequenzbereichen das gemessene Schalldrucksignal minimal wird.

4. Vorrichtung nach Anspruch 1 oder 2 oder 3, dadurch gekennzeichnet, daß die Resonatoren (1, 10, 10', 20, 30, 40) schmalbandige Resonatoren sind, deren Eigenfrequenzbereiche einstellbar sind.

5. Vorrichtung nach Anspruch 1 oder 2 oder 3, dadurch gekennzeichnet, daß sie den Eigenfrequenzbereich jedes Resonators (1, 10, 10', 20, 30, 40) auf mindestens eine der - sich mit der Raddrehzahl ändernden - Frequenzen im Reifen/Fahrbahngeräusch abstimmt.

6. Vorrichtung nach Anspruch 1 oder 2 oder 3 dadurch gekennzeichnet, daß zumindest einer der schallabsorbierenden Resonatoren ein Helmholtz-Resonator oder ein Lambda/4-Resonator oder ein Lochresonator ist.

7. Vorrichtung nach Anspruch 1 oder 2 oder 3 dadurch gekennzeichnet, daß der schallabsorbierende Resonator ein Helmholtz-Resonator (1) mit veränderlicher Resonatorhalslänge oder Resonator-Eintrittsöffnung ist.

8. Vorrichtung nach Anspruch 1 oder 2 oder 3, dadurch gekennzeichnet, daß der schallabsorbierende Resonator ein veränderliches Hohlraumvolumen aufweist.

9. Vorrichtung nach Anspruch 7, dadurch gekennzeichnet, daß der Resonator einen als doppelwandigen Balg (3) ausgeführten Resonatorhals, der vorzugsweise aus Gummi oder Kunststoff besteht, aufweist, dessen Innenraum mit veränderlichem Luftdruck befüllbar ist.

10. Vorrichtung nach Anspruch 7, dadurch gekennzeichnet, daß der Resonator einen als balgartigen, hohlen Körper (13) ausgebildeten Resonatorhals ausweist, dessen innenseitige Wand mit zumindest einem umlaufenden keilartigen Vorsprung (13a) versehen ist, wobei der balgartige Körper (13) mit veränderlichem Luftdruck befüllbar ist.

11. Vorrichtung nach Anspruch 7, dadurch gekennzeichnt, daß der Durchmesser des Resonatorhalses über einen verstellbaren Mechanismus, beispielsweise mit einer drucksensiblen Membran (13'), veränderbar ist.

12. Vorrichtung nach Anspruch 7, dadurch gekennzeichnet, daß mehrere Helmholtz-Resonatoren (20) mit unterschiedlichen Hohlraumvolumina in einem Gehäuse (19) angeordnet sind, wobei über den insbesondere verschieden großen Öffnungen (20a) der Resonatoren (20) ein verschiebbares Raster (15) angeordnet ist, das mit Löchern (15a) versehen ist, die in unverschobener Lage mit den Öffnungen (20a) der Resonatoren (20) deckungsgleich sind.

13. Vorrichtung nach Anspruch 8, dadurch gekennzeichnet, daß mehrere Resonatoren (10) mit unterschiedlichen Hohlraumvolumina nebeneinander angeordnet sind und gemeinsame Wandbereiche (11) besitzen, wobei sowohl diese, als auch die entsprechenden Außenwände doppelwandig, also als Balg, mit dehnbaren Wänden ausgeführt sind, deren Innenräume mit veränderlichem Luftdruck befüllbar sind.

14. Vorrichtung nach Anspruch 8, dadurch gekennzeichnet, daß mehrere Resonatoren (10') mit unterschiedlichen Hohlraumvolumina nebeneinander angeordnet sind, deren Wände (11') zumindest zum Teil balgartig ausgeführt sind und deren Hohlräume direkt mit sich veränderlichem Luftdruck befüllbar sind.

15. Vorrichtung nach Anspruch 1 oder 2 oder 3, dadurch gekennzeichnet, daß die Resonatoren elektrisch, pneumatisch oder hydraulisch verstellt werden.

16. Vorrichtung nach einem der Ansprüche 1 bis 3, dadurch gekennzeichnet, daß der Resonator (30) eine Einrichtung aufweist, mit der die Wandimpedanz zumindest einer der Resonatorwände (32) veränderbar ist.

17. Vorrichtung nach Anspruch 16, dadurch gekennzeichnet, daß in die Resonatorwand (32) ein Lautsprecher (33) eingebaut ist.

18. Vorrichtung nach Anspruch 16, dadurch gekennzeichnet, daß auf der Resonatorwand (32) eine Piezofolie oder eine Piezokeramik aufgebracht ist.

19. Vorrichtung nach einem der Ansprüche 2 bis 15 oder 16 bis 18, dadurch gekennzeichnet, daß die Schallaufnehmer (43 bzw. 34) vor oder an den Resonatoren (40 bzw. 30) angeordnet sind, und, daß die elektronische Regeleinrichtung (42 bzw. 36) gemäß einer Frequenz- oder Ordnungsanalyse eine Verstellung der Resonatoren (40 bzw. 30) bewirkt.

20. Vorrichtung nach einem der Ansprüche 16 bis 19, dadurch gekennzeichnet, daß im Resonator (30) ein Schallaufnehmer (35), beispielsweise ein Mikrophon, enthalten ist, welches eine Eingangsgröße für die Regeleinrichtung (36) zur Ansteuerung des Resonators (30) liefert.

21. Vorrichtung nach einem der vorangehenden Ansprüche, dadurch gekennzeichnet, daß die Steuer- bzw. Regel- bzw. Datenverarbeitungseinrichtung (36, 42) eine Einrichtung zur Umschaltung von Resonatoren aufweist.

22. Vorrichtung nach einem der Ansprüche 2 bis 21, dadurch gekennzeichnet, daß die Regeleinrichtung (36, 42) die Resonanzfrequenzen der räumlich verteilten Resonatoren an die räumliche und variabelen Verteilung des einfallenden Schalles anpaßt.

23. Vorrichtung nach einem der vorangehenden Ansprüche, dadurch gekennzeichnet, daß die Zwischenräume zwischen den Resonatoren und/oder den Resonatoröffnungen und/oder den Resonatorhälsen mit einem schallabsorbierenden Material, beispielsweise Schaumstoff, Glaswolle, Steinwolle oder dergleichen, versehen ist.

24. Vorrichtung nach einem der vorangehenden Ansprüche, dadurch gekennzeichnet, daß die Resonatoren von Luft durchströmt werden.

25. Vorrichtung nach einem der vorangehenden Ansprüche, dadurch gekennzeichnet, daß die Resonatoröffnungen im wesentlichen schalldurchlässig abgedeckt sind, beispielsweise mit einer Membran, oder einer Folie, oder einem Gewebe.

26. Vorrichtung nach einem der vorangehden Ansprüche, dadurch gekennzeichnet, daß die Schallabsorber in den Bereichen der hauptsächlichen Abstrahlrichtung des Reifen/Fahrbahngeräusches angebracht sind.

## Claims

1. Apparatus for reducing predetermined noise levels in the tyre/roadway noise emitted by an automotive vehicle fitted with an ABS braking system, sound absorbers (1, 10, 10', 20, 30, 40) being disposed in the region of radiation directions of the tyre/roadway noise and being configured as resonators, said absorbers being adaptable to noise levels, the frequencies of which vary in proportion to the wheel speed, characterised in that the resonators are mounted on the internal wall of the wheel housing of the vehicle, and an electronic control arrangement (42) is provided, the signal relating to the wheel speed being transferred from the ABS braking system to said control arrangement, and the control arrangement adjusting the resonators (40) according to the total number of blocks of the tyre, according to the sound radiation characteristics and according to the variable wheel speed.

2. Apparatus for reducing predetermined noise levels in the tyre/roadway noise emitted by an automotive vehicle, sound absorbers (1, 10, 10', 20, 30, 40) being disposed in the region of radiation directions of the tyre/roadway noise and being configured as resonators, said absorbers being adaptable to noise levels of variable frequencies, characterised in that the resonators are mounted on the internal wall of the wheel housing of the vehicle, and an electronic regulating arrangement (42) is provided, the signal, which is picked-up by sound receivers, for example microphones, and relates to the development with respect to time of the sound pressure, being supplied to said regulating arrangement, and an adjusting arrangement adjusting the resonators (40) in such a manner that the measured sound pressure signal becomes minimal.

3. Apparatus for reducing predetermined noise levels in the tyre/roadway noise emitted by an automotive vehicle fitted with an ABS braking system, sound absorbers (1, 10, 10', 20, 30, 40) being disposed in the region of radiation directions of the tyre/roadway noise and being configured as resonators, said absorbers being adaptable to noise levels, the frequencies of which vary in proportion to the wheel speed, characterised in that the resonators are mounted on the internal wall of the wheel housing of the vehicle, and in that a data processing arrangement (42) is provided, which is divided into an electronic control arrangement and an electronic regulating arrangement, the signal, which is picked-up by sound receivers, for example microphones, and relates to the development with respect to time of the sound pressure, being supplied to the regulating arrangement, and an adjusting arrangement, which is connected downstream of the data processing arrangement (42), adjusting the resonators (40) in such a manner that the measured sound pressure signal becomes minimal in the frequency ranges selected by the control arrangement according to the wheel speed signal.

4. Apparatus according to claim 1 or 2 or 3, characterised in that the resonators (1, 10, 10', 20, 30, 40) are narrow-band resonators, the inherent frequency ranges of which are adjustable.

5. Apparatus according to claim 1 or 2 or 3, characterised in that it adapts the inherent frequency range of each resonator (1, 10, 10', 20, 30, 40) to at least one of the frequencies - varying with the wheel speed - in the tyre/roadway noise.

6. Apparatus according to claim 1 or 2 or 3, characterised in that at least one of the sound-absorbing resonators is a Helmholtz resonator or a lambda/4 resonator or a perforated resonator.

7. Apparatus according to claim 1 or 2 or 3, characterised in that the sound-absorbing resonator is a Helmholtz resonator (1) having a variable resonator neck length or resonator inlet opening.

8. Apparatus according to claim 1 or 2 or 3, characterised in that the sound-aborbing resonator has a variable cavity volume.

9. Apparatus according to claim 7, characterised in that the resonator has a resonator neck, which is configured as a double-walled bellows (3) and is preferablv formed from rubber or plastics material, the interior of said neck being fillable with variable air pressure.

10. Apparatus according to claim 7, characterised in that the resonator has a resonator neck, which is configured as a bellows-like, hollow body (13), the internal wall of said neck being provided with at least one circumferential wedge-like projection member (13a), the bellows-like body (13) being fillable with variable air pressure.

11. Apparatus according to claim 7, characterised in that the diameter of the resonator neck is variable via an adjustable mechanism, which is provided with a pressure-sensitive diaphragm (13') for example.

12. Apparatus according to claim 7, characterised in that several Helmholtz resonators (20), having different cavity volumes, are disposed in a housing (19), a displaceable raster (15) being disposed over the openings (20a) of the resonators (20), such openings being, more especially, of different sizes, said raster being provided with holes (15a) which are identical in area to the openings (20a) of the resonators (20) in the non-displaced position.

13. Apparatus according to claim 8, characterised in that several resonators (10), having different cavity volumes, are disposed adjacent one another and have common wall regions (11), both these wall regions and the corresponding external walls having a double-walled configuration, that is to say in the form of bellows with expandable walls, the internal spaces of said walls being fillable with variable air pressure.

14. Apparatus according to claim 8, characterised in that several resonators (10'), having different cavity volumes, are disposed adjacent one another, the walls (11') of which resonators are at least partially configured in the form of bellows, and the cavities of which resonators are fillable directly with variable air pressure.

15. Apparatus according to claim 1 or 2 or 3, characterised in that the resonators are electrically, pneumatically or hydraulically adjusted.

16. Apparatus according to one of claims 1 to 3, characterised in that the resonator (30) has an arrangement by means of which the wall impedance of at least one of the resonator walls (32) is variable.

17. Apparatus according to claim 16, characterised in that a loudspeaker (33) is incorporated in the resonator wall (32).

18. Apparatus according to claim 16, characterised in that a piezofilm or a piezoelectric ceramic material is attached to the resonator wall (32).

19. Apparatus according to one of claims 2 to 15 or 16 to 18, characterised in that the sound receivers (43 and 34 respectively) are disposed upstream of or on the resonators (40 and 30 respectively), and in that the electronic regulating arrangement (42 or 36 respectively) effects an adjustment of the resonators (40 and 30 respectively) according to a frequency or order analysis.

20. Apparatus according to one of claims 16 to 19, characterised in that a sound receiver (35), for example a microphone, is contained in the resonator (30) and supplies an input parameter for the regulating arrangement (36) to actuate the resonator (30).

21. Apparatus according to one of the preceding claims, characterised in that the control or regulating or data processing arrangement (36, 42) has an arrangement for switching-over resonators.

22. Apparatus according to one of claims 2 to 21, characterised in that the regulating arrangement (36, 42) adapts the resonance frequencies of the spatially distributed resonators to the spatial and variable distribution of the incident sound.

23. Apparatus according to one of the preceding claims, characterised in that the intermediate spaces between the resonators and/or the resonator openings and/or the resonator necks are provided with a sound-absorbing material, for example expanded plastic foam, glass wool, rock wool or the like.

24. Apparatus according to one of the preceding claims, characterised in that the resonators are traversed by air.

25. Apparatus according to one of the preceding claims, characterised in that the resonator openings are substantially covered in a sound-permeable manner, for example with a diaphragm, or a film, or a fabric.

26. Apparatus according to one of the preceding claims, characterised in that the sound absorbers are provided in the regions of the main direction of radiation of the tyre/roadway noise.

## Revendications

1. Dispositif pour réduire des composantes de bruit déterminées dans le bruit pneumatique/chaussée émis par un véhicule automobile équipé d'un système de freinage ABS, dans lequel dans la zone de directions d'émission du bruit pneumatique/chaussée sont disposés des atténuateurs acoustiques (1,10,10',20,30,40), qui sont agencés en tant que résonateurs et peuvent être accordés sur des composantes de bruit, dont les fréquences varient proportionnellement à la vitesse de rotation de roue,
caractérisé en ce que les résonateurs sont montés dans le véhicule sur la paroi intérieure du carter de roue et il est prévu un dispositif de commande électronique (42), dans lequel le signal concernant la vitesse de rotation de roue est pris en charge par le système de freinage ABS, le dispositif de commande réglant les résonateurs (40) en fonction du nombre total de blocs de sculpture du pneumatique, de la caractéristique d'émission de bruit et de la vitesse de rotation de roue variable.

2. Dispositif pour réduire des composantes déterminées de bruit dans le bruit pneumatique/chaussée émis par un véhicule automobile, dans lequel dans la zone de directions d'émission du bruit pneumatique/chaussée sont disposés des atténuateurs acoustiques (1,10,10',20,30,40) qui sont agencés sous la forme de résonateurs et peuvent être accordés sur des composantes de bruit possédant des fréquences variables,
caractérisé en ce que les résonateurs sont montés dans le véhicule sur la paroi intérieure du carter de roue, et il est prévu un dispositif de régulation électronique (42), dans lequel est envoyé le signal enregistré par des capteurs acoustiques, par exemple des microphones, et concernant l'allure dans le temps de la pression acoustique, un dispositif d'ajustement réglant les résonateurs (40) de manière que le signal mesuré de pression acoustique devienne minimum.

3. Dispositif pour réduire des composantes de bruit déterminées dans le bruit pneumatique/chaussée émis par un véhicule automobile équipé d'un système de freinage ABS, dans lequel dans la zone de directions d'émission du bruit pneumatique/chaussée sont disposés des atténuateurs acoustiques (1,10,10',20,30,40), qui sont agencés en tant que résonateurs et peuvent être accordés sur des composantes de bruit, dont les fréquences varient proportionnellement à la vitesse de rotation de roue,
caractérisé en ce que les résonateurs sont montés dans le véhicule sur la paroi intérieure du carter de roue et qu'il est prévu un dispositif de traitement de données (42), qui est subdivisé en un dispositif de commande électronique et un dispositif de régulation électronique, et le signal enregistré par des capteurs acoustiques, par exemple des microphones, et concernant la variation dans le temps de la pression acoustique est envoyé au dispositif de régulation, et un dispositif d'ajustement, branché en aval du dispositif de traitement de données (42), règle les résonateurs (40) de telle sorte que le signal mesuré de pression acoustique devient minimum dans les gammes de fréquences sélectionnées par le dispositif de commande en fonction du signal de vitesse de rotation de roue.

4. Dispositif selon la revendication 1 ou 2 ou 3, caractérisé en ce que les résonateurs (1,10',20,30,40) sont des résonateurs à bande étroite, dont les gammes de fréquences propres sont réglables.

5. Dispositif selon la revendication 1 ou 2 ou 3, caractérisé en ce qu'il règle la gamme de fréquences propres de chaque résonateur (1,10,10',20,30,40) sur au moins l'une des fréquences - qui varie avec la vitesse de rotation de roue - contenues dans le bruit pneumatique/chaussée.

6. Dispositif selon la revendication 1 ou 2 ou 3, caractérisé en ce qu'au moins l'un des résonateurs absorbant le son est un résonateur de Helmholtz ou un résonateur lambda/4 ou un résonateur à trous.

7. Dispositif selon la revendication 1 ou 2 ou 3, caractérisé en ce que le résonateur, qui absorbe le son, est un résonateur de Helmholtz (1) présentant une longueur de col ou une ouverture d'entrée variable.

8. Dispositif selon la revendication 1 ou 2 ou 3, caractérisé en ce que le résonateur, qui absorbe le son, possède une cavité de volume variable.

9. Dispositif selon la revendication 7, caractérisé en ce que le résonateur comporte un col, qui est agencé sous la forme d'un soufflet (3) à paroi double, qui est réalisé de préférence en caoutchouc ou en matière plastique, et dont l'espace intérieur peut être rempli avec une pression d'air variable.

10. Dispositif selon la revendication 7, caractérisé en ce que le résonateur comporte un col agencé sous la forme d'un corps creux en forme de soufflet (13), dont la paroi intérieure comporte au moins une partie saillante circonférentielle en forme de coin (13a), le corps en forme de soufflet (13) pouvant être rempli avec une pression d'air variable.

11. Dispositif selon la revendication 7, caractérisé en ce que le diamètre du col du résonateur peut être modifié au moyen d'un mécanisme réglable, par exemple une membrane (13') sensible à la pression.

12. Dispositif selon la revendication 7, caractérisé en ce que plusieurs résonateurs de Helmholtz (20), ayant des cavités dont les volumes sont différents, sont disposés dans un boîtier (19), et qu'au-dessus des ouvertures (20a), qui ont notamment des tailles différentes, des résonateurs (20) est disposé un réseau déplaçable (15) qui comporte des trous (15a) qui, dans une position non décalée, sont situés en recouvrement avec les ouvertures (20a) des résonateurs (20).

13. Dispositif selon la revendication 8, caractérisé en ce que plusieurs résonateurs (10), dont les cavités ont des volumes différents, sont disposés côte-à-côte et possèdent des éléments de paroi communs (11), aussi bien ces éléments de paroi que les parois extérieures correspondantes étant réalisés à paroi double, c'est-à-dire sous la forme d'un soufflet comportant des parois extensibles, dont les espaces intérieurs peuvent être remplis avec une pression d'air variable.

14. Dispositif selon la revendication 8, caractérisé en ce que plusieurs résonateurs (10'), dont les cavités ont des volumes différents, sont disposés côte-à-côte, leurs parois (11') étant agencées au moins en partie en forme de soufflet tandis que leurs cavités peuvent être remplies directement avec une pression d'air variable.

15. Dispositif selon la revendication 1 ou 2 ou 3, caractérisé en ce que les résonateurs sont réglés électriquement, pneumatiquement ou hydrauliquement.

16. Dispositif selon l'une des revendications 1 à 3, caractérisé en ce que le résonateur (30) comporte un dispositif, au moyen duquel l'impédance d'au moins l'une des parois (32) du résonateur peut être modifiée.

17. Dispositif selon la revendication 16, caractérisé en ce qu'un haut-parleur (33) est monté dans la paroi (32) du résonateur.

18. Dispositif selon la revendication 16, caractérisé en ce qu'une feuille piézoélectrique ou une piézocéramique est appliquée sur la paroi (32) du résonateur.

19. Dispositif selon l'une des revendications 2 à 15 ou 16 à 18, caractérisé en ce que les capteurs acoustiques (43 ou 34) sont disposés devant ou à côté des résonateurs (40 ou 30) et que le dispositif de régulation électronique (42 ou 36) exécute, conformément à une analyse de fréquence ou une analyse d'ordre, un réglage des résonateurs (40 ou 30).

20. Dispositif selon l'une des revendications 16 à 19, caractérisé en ce que le résonateur (30) contient un capteur acoustique (35), de préférence un microphone, qui délivre une grandeur d'entrée pour le dispositif de régulation (36) pour la commande du résonateur (30).

21. Dispositif selon l'une des revendications précédentes, caractérisé en ce que le dispositif de commande ou de régulation ou de traitement de données (36,42) comporte un dispositif pour réaliser la commutation de résonateurs.

22. Dispositif selon l'une des revendications 2 à 21, caractérisé en ce que le dispositif de régulation (36,42) adapte les fréquences de résonance des résonateurs répartis spatialement, à la répartition spatiale et variable du son arrivant.

23. Dispositif selon l'une des revendications précédentes, caractérisé en ce que les espaces intercalaires entre les résonateurs et/ou les ouvertures des résonateurs et/ou les cols des résonateurs sont remplis par un matériau absorbant le son, par exemple un matériau mousse, de la laine de verre, de la laine minérale ou analogue.

24. Dispositif selon l'une des revendications précédentes, caractérisé en ce que les résonateurs sont traversés par une circulation d'air.

25. Dispositif selon l'une des revendications précédentes, caractérisé en ce que les ouvertures des résonateurs sont fermées d'une manière sensiblement perméable au son, par exemple au moyen d'une membrane ou d'une feuille ou d'un tissu.

26. Dispositif selon l'une des revendications précédentes, caractérisé en ce que les dispositifs d'absorption acoustique sont installés dans les zones de la direction principale d'émission du bruit pneumatique/chaussée.
